# EUROPEAN PATENT SPECIFICATION

(11) **EP 0 715 878 B1**
(45) Date of publication and mention of the grant of the patent: **09.01.2002**
(21) Application number: 95203162.3
(22) Date of filing: 18.11.1995
(51) Int. Cl.: B01D 53/04, B60H 3/06

(54) **Air filter and associated regeneration process**
Luftfilter mit Regenerierungsverfahren
Filtre d'air et procédé de régénération

(30) Priority: 25.11.1994 IT TO940965
(43) Date of publication of application: 12.06.1996
(73) Proprietor: C.R.F. Società Consortile per Azioni, 10043 Orbassano (TO) (IT)
(72) Inventor: Malvicino, Carloandrea, I-10146 Torino (IT); Palazzetti, Mario, I-10051 Avigliana (Torino) (IT)
(74) Representative: Quinterno, Giuseppe

(56) References cited:
- EP-A- 0 477 481
- DE-U- 8 700 521
- GB-A- 2 252 968

## Description

The present invention relates generally to an air filter for air conditioning. More specifically, the present invention relates to a regenerable air filter and an associated regeneration process of the kinds defined in the preambles of Claims 1 and 13, respectively.

The invention has been developed in particular for application to motor vehicle air conditioning systems, it can however also be applied to air conditioning installations of different types such as, for example, air conditioning installations for dwellings.

These days there is an increasing tendency to provide air conditioning or climate control installations in motor vehicles with an air filter. Often, even motor vehicles having a ventilation system, that is those not having an air conditioner or climate control device, are provided with such an air filter. The object of the air filter is to clean incoming air or air which circulates within the passenger compartment of the vehicle. The object of the filter is therefore that of cleaning unwanted substances from the air.

Such substances are essentially of two types, that is to say dust and gas. The usefulness of cleaning air of such substances is evident. In fact, dust, which includes substances such as pollens, can cause irritation of the eyes and of the mucous membranes of the respiratory apparatus, as well as allergies. Equally, numerous gases can be present in air, including the gaseous products of internal combustion engines, which have an unpleasant smell and are noxious or irritant.

To filter dust one or more layers of a porous filtering material such as, for example, paper, fabric or felt are used. On the other hand, in order to filter gases, use is made of adsorbent substances usually provided in granular form, that is to say able to absorb unwanted gases. So-called activated carbon is typically used for this purpose.

Typically the filters with which modern motor vehicle air conditioning systems are provided are therefore provided with a cartridge or filtering element comprising a layer of activated carbon, operable to retain toxic and/or malodorous gases, and a layer of porous filtering material operable to retain substances in the form of particles such as dust and/or pollen. The two layers are adjacent or contiguous one another and are traversed by a flow of air which is then introduced into the passenger compartment of the vehicle.

Such filters, although effective in that they are able to eliminate substances which are dangerous or irritant to the organism, do however have several serious technical disadvantages.
A first disadvantage arises from the necessity of periodically replacing the cartridge or filtering element, with consequent costs which are sometimes high. This necessity is due to the fact that the said adsorbent substances, such as activated carbon, have a limited capacity for gas absorption. In this regard the motor vehicle manufacturers have adopted substantially two different strategies for dimensioning and production of filters.

A first strategy utilises filters containing a large quantity of activated carbon (for example 700 grammes) such as to permit, by way of absorption, substantial elimination of the unwanted gases.

A second strategy, on the other hand, envisages the use of filtering cartridges containing a small quantity of activated carbon (typically from 50 to 70 grammes). This strategy is based on the fact that the olfactory perception of human beings is much more sensitive to the variations in odorous substances. In other words, in practice, if an odorous substance is introduced into the air, there is initially a very intense olfactory perception of it which however gradually reduces over time.

By exploiting this phenomenon the filtering cartridges having a small quantity of activated carbon are limited to smoothing the effect of possible malodorous gases introduced into the passenger compartment, in this way attenuating the unpleasant sensations perceived by the occupants. This occurs in that a malodorous gas which is introduced into the passenger compartment is initially efficiently absorbed by the activated carbon. Subsequently, because of the saturation of the absorption capacity of the activated carbon, the absorption becomes increasingly less effective. In the long term the filtering cartridge no longer absorbs the gas, but allows it to pass through (or rather, in general, there is a slight desorption, that is to say a release of gas); at this point, however, the olfactory perception of the passenger compartment occupants has adapted to the presence of the malodorous gas so that it is very much less unpleasant.

With both these strategies, the cartridges become exhausted after a certain period of use, that is to say they lose their capacity for absorption and thus are no longer able to perform the function for which they were produced. Typically the average life time of filtering cartridges can be at most several months. This, as already mentioned, necessitates periodic replacement of the cartridges with consequent costs of both the cartridges themselves and the labour necessary for their replacement.

A second disadvantage of this type of filter is given by the possibility of the formation of colonies of bacteria within the filters themselves. Such filters, in fact, are typically excellent culture media for numerous species of bacteria. This is due to a series of factors.

In the first place, the filters are made of fibrous, porous or granular material therefore having a very extended surface area which therefore provides a very extensive and favourable support for bacteria. Moreover, such substances are generally more or less hygroscopic, so that they always retain a certain quantity of moisture, which permits possible bacterial depositions on them to prosper. For many species of bacteria it is also favourable that these filters are located within the interior of ventilation ducts and therefore in the dark.

For these reasons the filters represent an excellent culture medium for bacterial colonies. The formation of such colonies therefore becomes an extremely probable event in that the filters, by retaining the particles present in the air, capture the majority of the bacteria present in the air which can therefore give rise to bacterial cultures.

The formation of bacterial cultures in filters is certainly a disadvantage in that the current of air which flows through the filter can carry potentially noxious bacteria which are in this way introduced into the passenger compartment of the vehicle. Moreover, such bacterial cultures are often a source of unpleasant and intense odours.

EP-A-0477481 discloses a filter and a process of the afore-defined kinds. The filter according to this document is of tubular configuration and air flows therethrough transversely to a central longitudinal axis. Layered discs are filled with activated carbon and are separated from one another by intermediate layers of good heat-conducting material. Peripheral armatures clamp the discs and the intermediate layers to each other in the direction of the central longitudinal axis of the filter. The armatures are heated by resistors or warm water for the desorption of the activated carbon. A filter of this type is not adapted to filter solid particles from the air entering the vehicle.

DE-U-8700521 discloses a filter for the air-conditioning system of a vehicle comprising two layers of synthetic fibres with different filtering capabilities and, optionally, a layer of active carbon. The filter is useful for the filtering of street dust and can be mounted between heat exchangers of the heating and the cooling apparatuses of the vehicle. No means for the desorption of gases from the layer of carbon is provided.

GB-A-2252968 discloses an adsorbent material comprising a composition comprising a sepiolite and a zeolite, advantageous for operation in an atmosphere of high humidity, in particular in refrigerators. Desorption of stored gases can be effected by the flow of warm air generated by a refrigerator during defrosting operations.

The object of the present invention is that of providing a regenerable filter, and an associated regeneration process, which allows all the previously indicated problems to be resolved in a satisfactory manner.

According to the present invention this object is achieved by a regenerable filter, and an associated regeneration process, having the characteristics indicated in claims 1 and 13 which follow the present description.

Further advantages and characteristics of the present invention will become apparent from the following detailed description given with the aid of the attached drawings, provided purely by way of non-limitative example, in which:
Figure 1 is a diagram illustrating the operating principle of a filter according to the present invention; and
Figure 2 is an exploded schematic representation of an embodiment of a filter according to the present invention.

As previously mentioned, such filters are characterised by the use of substances, typically activated carbon, having the capacity to absorb unwanted gases present in the air. This phenomenon of absorption of these gases, however, as previously indicated, is not an irreversible process. In fact, these gases can be yielded again, or released, into the air by such substances after having been absorbed. This release phenomenon is called desorption in that it is the opposite of the absorption process.

The desorption process is regulated by the pressure of the gas in question and by the temperature of the filtering substance. Typically, desorption increases with an increase in temperature of the filtering substance and with the reduction in the pressure of the gas in question.

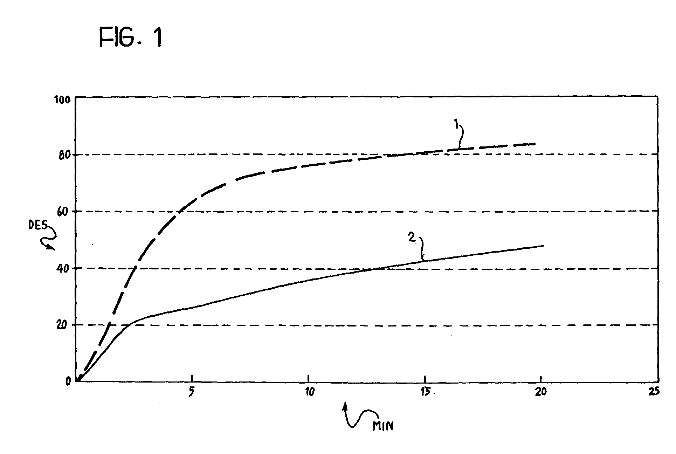

In Figure 1 a graph is shown in which the variation of the desorption process of an activated carbon filtering material, called KURARAY FT-200 (registered trade mark) is plotted in which the gas is a hydrocarbon and, more precisely, HC. In the graph, along the abscissa MIN, time is plotted in minutes, whilst along the ordinate DES the desorption expressed as a percentage is plotted. The curve 1 refers to desorption in a flow of helium (12 mm per second) whilst the curve 2 refers to desorption in static air. For both curves 1, 2 the temperature of the filtering material is 80°C. As can be seen from the graph, in a fairly short time (for example 15 minutes) and with a moderate flow an almost complete desorption of the gas from the filtering material is obtained.

The invention consists therefore in a filter of the said type which can be regenerated by means of a process which leads to desorption of the filtering material used in the filter. In particular, in an embodiment currently considered preferable, this process provides that the filtering material in question, in the specific case activated carbon, is heated to a temperature greater than 50°C, preferably of about 80°C and at least a modest flow of air is made to pass through it. In this way an almost total regeneration of the activated carbon occurs.

The regeneration process therefore consists in a phase of limited duration, for example from 5 to 30 minutes, in which the activated carbon present in the filter is brought to a temperature of about 80-90°C, whilst a modest flow of air is made to traverse it. This flow of air is preferably in the opposite direction with respect to the normal direction of the flow during operation of the air conditioning installation in which the filter in question is installed.

During the desorption, in fact, the activated carbon releases the noxious gases or unpleasant smells which it has absorbed during normal operation. If the flow of air during the course of the regeneration phase were not reversed, these gases would be introduced directly into the passenger compartment. By reversing the flow, on the other hand, in such a way that it is directed towards the exterior of the passenger compartment, this problem is avoided and the regeneration phase can be performed without contra indications.

The magnitude, or flow rate, of this flow is advantageously modest in that it essentially has the function of carrying away the gases released during the desorption process in such a way as to expel them. An intense flow of air would only have the effect of producing a greater consumption of energy both for establishing the air flow itself and for the greater quantity of energy necessary to maintain the activated carbon at the temperature of 80°C, given the cooling produced by the air flow. For this reason it is convenient to use an air flow with a linear velocity of the order of several millimetres per second.

This procedure, as well as producing the desorption and therefore the regeneration of the activated carbon, also has other advantageous effects.

In the first place the heating of the activated carbon and the flushing with a flow of air causes drying of the filter with consequent total elimination of the moisture accumulated in the filter itself during normal use. This is particularly useful in that it makes the proliferation of bacteria within the filter very difficult. Moreover, the regeneration phase, because of the periodic elevation of the temperature of the filter to 80-90°C in fact constitutes a sterilisation process known as tyndallisation which kills off the bacteria present in the filter. In this way the regeneration phase also has the advantageous effect of causing a total elimination of any bacteria accumulated in the filter.

It is evident that the regeneration procedure must be performed periodically in such a way as to renew the absorption capacity of the activated carbon and effectively to sterilise the filter. During the regeneration procedure normal operation of the air conditioning installation is not possible; this is not however a problem in that, as is seen, the procedure requires only a short time.

In the case of air conditioning installations in a dwelling, for example, the procedure can advantageously be performed once a day, possibly at night.

In the case of an air conditioning system of a motor vehicle, on the other hand, the procedure can be performed automatically each time the vehicle engine is extinguished and the vehicle is closed and left unused. In this way, for example, at the end of each journey the regeneration and sterilisation of the air conditioning system filter takes place.

This procedure can therefore be activated automatically by a central control unit installed on board the motor vehicle. Since the procedure is performed when the vehicle is stationary the necessary energy for its execution is provided by the vehicle battery. This does not constitute a problem since, as is seen, the necessary consumption to perform the regeneration phase is modest.

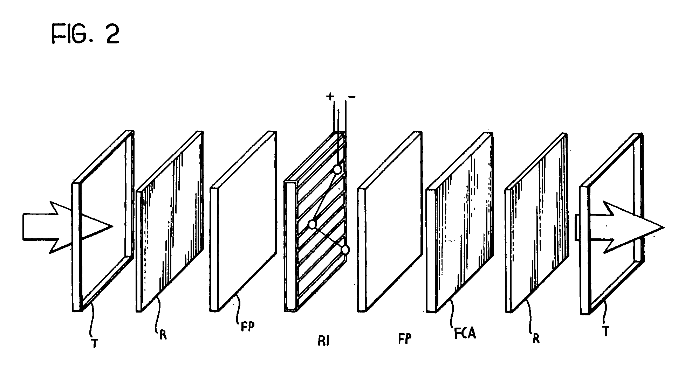

A filtering element or cartridge arranged for performance of the procedure according to the present invention will now be described purely by way of illustration, with reference to Figure 2. In this specific case the cartridge has a rectangular shape and comprises two meshes R supported by a frame T, between which are disposed several layers of filtering material. These layers of filtering material comprise a particle filter FP and an activated carbon filter FCA for absorbing gas.

The particle filter FP is shown in the drawing separated into two distinct layers in that within it is fitted a heater RIS. The heater RIS is in practice fitted within the particle filter FP. The heater RIS is typically an electric heater and is constituted by resistive filaments inserted between the layers of porous material of the particle filter FP.

During the regeneration phase a flow of air in the direction of the large arrows represented at the frame T is established by means of a fan forming part of the air conditioning system (not illustrated). It is evident therefore how activation of the heater RIS causes heating to the desired temperature of both the particle filter FP in which the heater RIS itself is fitted, and of the activated carbon filter FCA which is adjacent the particle filter FP and is traversed by the heated air which has just passed through the particle filter FP.

In this way the regeneration phase is advantageously performed and, both the particle filter FP and the activated carbon filter FCA are contemporaneously sterilised and dried.

Alternatively, the heater RIS can be outside the filter and fitted in the ventilation duct, although this solution is less energy efficient.

With the filter and process according to the present invention it is possible to make the filter in such a way and to such a size that it will not need to be replaced over the whole lifetime of the motor vehicle, or is rendered necessary only at very long intervals, whilst having a greatly reduced quantity of activated carbon therefore allowing an advantageous saving in costs and in the space occupied by the filter itself. This is obtained, whilst also obtaining the almost total absorption of unwanted gases in a similar manner to the expensive and bulky filters formed according to the said first strategy.

Naturally it is also possible to use absorbent substances different from activated carbon, such as, for example, zeolite, in that the principle at the basis of the present invention is not dependent on the particular type of absorbent material used in the filter and likewise is exclusive of the particular form and/or configuration of the filter itself.

## Claims

1. A process for regeneration of an air filter of an air conditioning system for an environment, the said filter including at least one first layer of filtering material (FCA) able to absorb unwanted gases, including the operation of heating the said at least one first layer of filtering material (FCA) for a limited time interval to a high temperature such as to produce a substantial desorption of the said unwanted gases from the said filtering material (FCA), **characterised in that** said air filter further includes at least a second layer of filtering material (FP) upstream and adjacent to said first layer of filtering material (FCA) operable to retain particles present in the air, the said heating involves all of the layers of filtering material (FCA, FP) of the said filter in such a way as to cause the drying thereof.

2. A process according to Claim 1, **characterised in that** it further includes the operation of generating a flow of air, of low flow rate, through the said filter, substantially contemporaneously with the said heating operation.

3. A process according to Claim 2, **characterised in that** the said flow of air is directed towards the outside of the said environment.

4. A process according to any of Claims from 1 to 3, **characterised in that** it is repeated periodically.

5. A process according to Claim 4, **characterised in that** the said time interval lies between 5 and 30 minutes.

6. A process according to any of Claims from 1 to 5, **characterised in that** the first layer of filtering material is made of activated carbon (FCA), and the said elevated temperature is greater than 50°C, preferably about 80°C.

7. A process according to any of Claims from 1 to 5, **characterised in that** the first layer of filtering material (FCA) is made of zeolite, and the said elevated temperature lies between 140°C and 200°C.

8. A process according to any of Claims from 2 to 7, **characterised in that** the said flow of air has a linear velocity less than 10 cm/sec.

9. A process according to any of Claims from 1 to 8, in which the said environment is the passenger compartment of a motor vehicle, **characterised in that** it is performed when the said motor vehicle is not in use.

10. A process according to Claim 9, **characterised in that** it is performed automatically at the end of a period of use of the said motor vehicle, when it is stationary and unoccupied.

11. A process according to Claim 9 or Claim 10, **characterised in that** the said heating of the said filtering material (FCA) takes place by means of electrical heating means (RIS) supplied from an electrical battery of the said motor vehicle.

12. A process according to any of Claims from 1 to 11, in which the second layer (FP) of filtering material is separated into two distinct layers of porous material and in which the heating takes place by means of resistive filaments (RIS) inserted between said layers of porous material.

13. An air filter of an air conditioning system for an environment, the said filter comprising a first layer of filtering material (FCA) able to absorb unwanted gases, heating means (RIS) operable to carry the said first layer of filtering material (FCA) to an elevated temperature such as to cause a substantial desorption of the said unwanted gases from the said filtering material (FCA), **characterised in that** it further includes at least one second layer of filtering material (FP) upstream to said first layer of filtering material (FCA) operable to retain particles present in the air, in which the said first layer of filtering material (FCA) and the said second layer of filtering material (FP) are adjacent, and in which the said heating means (RIS) are fitted in the second layer of filtering material (FP).

14. A filter according to Claim 13, **characterised in that** the said first layer of filtering material is activated carbon (FCA).

15. A filter according to Claim 14, **characterised in that** the said heating means (RIS) are configured in such a way as to carry the said activated carbon (FCA) to a temperature greater than 50°C, preferably about 80°C.

16. A filter according to Claim 13, **characterised in that** the said first layer of filtering material (FCA) is zeolite.

17. A filter according to Claim 16, **characterised in that** the said heating means (RIS) are configured in such a way as to carry the said zeolite (FCA) to a temperature lying between 140°C and 200°C.

18. A filter according to any of Claims from 13 to 17, **characterised in that** the said heating means comprise an electric resistive heater (RIS).

19. A filter according to Claim 18, **characterised in that** the second layer (FP) of filtering material is separated into two distinct layers of porous material and in which the said resistive heater (RIS) is inserted between the said layers of porous material.

## Patentansprüche

1. Verfahren zur Regenerierung eines Luftfilters eines Klimatisierungssystems für eine Umgebung, wobei der Filter mindestens eine erste Schicht Filtermaterial (FCA) einschließt, die imstande ist, unerwünschte Gase zu absorbieren, einschließend den Vorgang des Erhitzens der mindestens einen ersten Schicht Filtermaterial (FCA) für ein begrenztes Zeitintervall auf eine hohe Temperatur, um so eine substanzielle Desorption der unerwünschten Gase vom Filtermaterial (FCA) hervorzurufen, **dadurch gekennzeichnet, dass** der Luftfilter ferner mindestens eine zweite Schicht Filtermaterial (FP) einschließt, und zwar stromaufwärts von der ersten Schicht Filtermaterial (FCA) und ihr benachbart, die dazu betriebsfähig ist, in der Luft vorhandene Teilchen zurückzuhalten, wobei das Erhitzen sämtliche Schichten Filtermaterial (FCA, FP) des Filters in einer solchen Art und Weise einbezieht, dass es deren Trocknen bewirkt.

2. Verfahren nach Anspruch 1, **dadurch gekennzeichnet, dass** es ferner den Vorgang des Erzeugens eines Luftstroms - mit einer niedrigen Durchflussgeschwindigkeit - durch den Filter einschließt, und zwar im Wesentlichen gleichzeitig mit dem Heizvorgang.

3. Verfahren nach Anspruch 2, **dadurch gekennzeichnet, dass** der Luftstrom nach außerhalb der Umgebung gerichtet ist.

4. Verfahren nach einem der Ansprüche 1 bis 3, **dadurch gekennzeichnet, dass** es periodisch wiederholt wird.

5. Verfahren nach Anspruch 4, **dadurch gekennzeichnet, dass** das Zeitintervall zwischen 5 und 30 Minuten liegt.

6. Verfahren nach einem der Ansprüche 1 bis 5, **dadurch gekennzeichnet, dass** die erste Schicht Filtermaterial aus Aktivkohle (FCA) hergestellt ist und die hohe Temperatur höher als 50° C, vorzugsweise etwa 80° C, ist.

7. Verfahren nach einem der Ansprüche 1 bis 5, **dadurch gekennzeichnet, dass** die erste Schicht Filtermaterial (FCA) aus Zeolith hergestellt ist und die hohe Temperatur zwischen 140° C und 200° C liegt.

8. Verfahren nach einem der Ansprüche 2 bis 7, **dadurch gekennzeichnet, dass** der Luftstrom eine lineare Geschwindigkeit unter 10 cm/s aufweist.

9. Verfahren nach einem der Ansprüche 1 bis 8, bei dem die Umgebung der Fahrgastraum eines Kraftfahrzeugs ist, **dadurch gekennzeichnet, dass** es durchgeführt wird, wenn das Kraftfahrzeug nicht in Verwendung steht.

10. Verfahren nach Anspruch 9, **dadurch gekennzeichnet, dass** es automatisch zu Ende eines Verwendungszeitraums des Kraftfahrzeugs durchgeführt wird, wenn es stillstehend und unbesetzt ist.

11. Verfahren nach Anspruch 9 oder Anspruch 10, **dadurch gekennzeichnet, dass** das Erhitzen des Filtermaterials (FCA) mittels elektrischer Heizeinrichtungen (RIS) erfolgt, die von einer elektrischen Batterie des Kraftfahrzeugs versorgt werden.

12. Verfahren nach einem der Ansprüche 1 bis 11, bei dem die zweite Schicht (FP) Filtermaterial in zwei unterschiedliche Schichten porösen Materials getrennt ist und bei dem das Erhitzen durch zwischen die Schichten porösen Materials eingefügte widerstandsbehaftete Filamente (RIS) erfolgt.

13. Luftfilter eines Klimatisierungssystems für eine Umgebung, wobei der Filter eine erste Schicht Filtermaterial (FCA) umfasst, die imstande ist, unerwünschte Gase zu absorbieren, Heizeinrichtungen (RIS), die dazu betriebsfähig sind, die erste Schicht Filtermaterial (FCA) auf eine hohe Temperatur zu bringen, um so eine substanzielle Desorption der unerwünschten Gase vom Filtermaterial (FCA) hervorzurufen, **dadurch gekennzeichnet, dass** er ferner mindestens eine zweite Schicht Filtermaterial (FP) einschließt, und zwar stromaufwärts von der ersten Schicht Filtermaterial (FCA), die dazu betriebsfähig ist, in der Luft vorhandene Teilchen zurückzuhalten, wobei die erste Schicht Filtermaterial (FCA) und die zweite Schicht Filtermaterial (FP) benachbart sind und wobei die Heizeinrichtungen (RIS) in der zweiten Schicht Filtermaterial (FP) eingebaut sind.

14. Filter nach Anspruch 13, **dadurch gekennzeichnet, dass** die erste Schicht Filtermaterial Aktivkohle (FCA) ist.

15. Filter nach Anspruch 14, **dadurch gekennzeichnet, dass** die Heizeinrichtungen (RIS) so ausgerührt sind, dass sie die Aktivkohle (FCA) bis auf eine Temperatur über 50° C, vorzugsweise etwa 80° C, erwärmen.

16. Filter nach Anspruch 13, **dadurch gekennzeichnet, dass** die erste Schicht Filtermaterial (FCA) Zeolith ist.

17. Filter nach Anspruch 16, **dadurch gekennzeichnet, dass** die Heizeinrichtungen (RIS) so ausgeführt sind, dass sie den Zeolith (FCA) bis auf eine Temperatur erwärmen, die zwischen 140° C und 200° C liegt.

18. Filter nach einem der Ansprüche 13 bis 17, **dadurch gekennzeichnet, dass** die Heizeinrichtungen einen elektrischen Heizwiderstand (RIS) umfassen.

19. Filter nach Anspruch 18, **dadurch gekennzeichnet, dass** die zweite Schicht (FP) Filtermaterial in zwei unterschiedliche Schichten porösen Materials getrennt ist, und bei dem der Heizwiderstand (RIS) zwischen die Schichten porösen Materials eingefügt ist.

## Revendications

1. Procédé de régénération d'un filtre à air d'un système de conditionnement d'air pour un environnement, ledit filtre comprenant au moins une première couche de matière filtrante (FCA) capable d'absorber des gaz indésirables, comprenant l'opération de chauffage de ladite au moins une première couche de matière filtrante (FCA) pendant un intervalle de temps limité à une température élevée de façon à produire une désorption substantielle desdits gaz indésirables de ladite matière filtrante (FCA), **caractérisé en ce que** ledit filtre à air comprend en outre au moins une deuxième couche de matière filtrante (FP) en amont et adjacente à ladite première couche de matière filtrante (FCA) pouvant fonctionner afin de retenir des particules présentes dans l'air, ledit chauffage impliquant toutes les couches de matière filtrante (FCA, FP) dudit filtre de manière à provoquer leur séchage.

2. Procédé selon la revendication 1, **caractérisé en ce qu'**il comprend en outre l'opération de génération d'un écoulement d'air, de faible débit, à travers le filtre à air, sensiblement simultanément à ladite opération de chauffage.

3. Procédé selon la revendication 2, **caractérisé en ce que** ledit écoulement d'air est dirigé vers l'extérieur dudit environnement.

4. Procédé selon l'une quelconque des revendications 1 à 3, **caractérisé en ce qu'**il est répété de manière périodique.

5. Procédé selon la revendication 4, **caractérisé en ce que** ledit intervalle de temps s'étend entre 5 et 30 minutes.

6. Procédé selon l'une quelconque des revendications 1 à 5, **caractérisé en ce que** la première couche de matière filtrante est fabriquée en charbon actif (FCA), et ladite température élevée est supérieure à 50°C, de préférence environ 80°C.

7. Procédé selon l'une quelconque des revendications 1 à 5, **caractérisé en ce que** la première couche de matière filtrante (FCA) est fabriquée en zéolite, et ladite température élevée s'étend entre 140°C et 200°C.

8. Procédé selon l'une quelconque des revendications 2 à 7, **caractérisé en ce que** ledit écoulement d'air a une vitesse linéaire inférieure à 10 cm/s.

9. Procédé selon l'une quelconque des revendications 1 à 8, dans lequel ledit environnement est le compartiment des passagers d'un véhicule à moteur, **caractérisé en ce qu'**il est mis en oeuvre lorsque ledit véhicule à moteur n'est pas utilisé.

10. Procédé selon la revendication 9, **caractérisé en ce qu'**il est réalisé automatiquement à la fin d'une période d'utilisation dudit véhicule à moteur, lorsqu'il est immobile et inoccupé.

11. Procédé selon la revendication 9 ou la revendication 10, **caractérisé en ce que** ledit chauffage de ladite matière filtrante (FCA) se produit à l'aide de moyens de chauffage électrique (RIS) alimentés par une batterie électrique dudit véhicule à moteur.

12. Procédé selon l'une quelconque des revendications 1 à 11, dans lequel la deuxième couche (FP) de matière filtrante est séparée en deux couches distinctes de matière poreuse et dans lequel le chauffage se produit au moyen de filaments résistifs (RIS) insérés entre lesdites couches de matière poreuse.

13. Filtre à air d'un système de conditionnement d'air pour un environnement, ledit filtre comportant une première couche de matière filtrante (FCA) capable d'absorber des gaz indésirables, des moyens de chauffage (RIS) pouvant fonctionner afin d'amener ladite première couche de matière filtrante (FCA) à une température élevée de façon à provoquer une désorption substantielle desdits gaz indésirables de ladite matière filtrante (FCA), **caractérisé en ce qu'**il comprend en outre au moins une deuxième couche de matière filtrante (FP) en amont de ladite première couche de matière filtrante (FCA) pouvant fonctionner afin de retenir des particules présentes dans l'air, dans lequel ladite première couche de matière filtrante (FCA) et ladite deuxième couche de matière filtrante (FP) sont adjacentes, et dans lequel lesdits moyens de chauffage (RIS) sont montés dans la deuxième couche de matière filtrante (FP).

14. Filtre selon la revendication 13, **caractérisé en ce que** ladite première couche de matière filtrante est du charbon actif (FCA).

15. Filtre selon la revendication 14, **caractérisé en ce que** lesdits moyens de chauffage (RIS) sont configurés de manière à amener ledit charbon actif (FCA) à une température supérieure à 50°C, de préférence environ 80°C.

16. Filtre selon la revendication 13, **caractérisé en ce que** ladite première couche de matière filtrante (FCA) est de la zéolite.

17. Filtre selon la revendication 16, **caractérisé en ce que** lesdits moyens de chauffage (RIS) sont configurés de manière à amener ladite zéolite (FCA) à une température s'étendant entre 140°C et 200°C.

18. Filtre selon l'une quelconque des revendications 13 à 17, **caractérisé en ce que** lesdits moyens de chauffage comportent un dispositif de chauffage résistif électrique (RIS).

19. Filtre selon la revendication 18, **caractérisé en ce que** la deuxième couche (FP) de matière filtrante est séparée en deux couches distinctes de matière poreuse et dans lequel ledit dispositif de chauffage résistif (RIS) est inséré entre lesdites couches de matière poreuse.
